**Europäisches Patentamt**

**European Patent Office**

**Office européen des brevets**

(19)

(11) Veröffentlichungsnummer: **0 265 559 B1**

# (12) EUROPÄISCHE PATENTSCHRIFT

(45) Veröffentlichungstag der Patentschrift: **22.01.92**

(51) Int. Cl.5: **B65B 21/04**, B65G 47/84

(21) Anmeldenummer: **86201882.7**

(22) Anmeldetag: **28.10.86**

(54) **Vorrichtung für das Formieren von Behältern zu einer Packanordnung.**

(43) Veröffentlichungstag der Anmeldung:
**04.05.88 Patentblatt 88/18**

(45) Bekanntmachung des Hinweises auf die
Patenterteilung:
**22.01.92 Patentblatt 92/04**

(84) Benannte Vertragsstaaten:
**DE ES FR GB IT NL**

(56) Entgegenhaltungen:
**GB-A- 1 014 767**
**US-A- 2 692 713**

(73) Patentinhaber: **Machinefabriek Rosario B.V.**
**Hoge Ham 88**
**NL-5104 JK Dongen (N.Br.)(NL)**

(72) Erfinder: **Schlechter, Helmut Paul, Dipl.-Ing.**
**Am Guldenbach 23**
**W-6542 Rheinböllen(DE)**

(74) Vertreter: **Siemens, Andreas Meinhard Ernest,**
**Dipl.-Ing.**
**SIEMENS & CIE. Roskam 8**
**NL-4813 GZ Breda(NL)**

## Beschreibung

Die vorliegende Erfindung bezieht sich auf eine Vorrichtung und ein Verfahren für das automatische Formieren von Behältern, wie Flaschen, Gefässe mit weitem oder engem Hals, Konservengläser und Blechdosen und ähnliche Gegenstände, die aus Glas, Steinzeug, Porzellan, Blech, Kunststoff, Pappe oder anderen zur Verpackung geeigneten Materialien hergestellt sind, zu einer Packung oder Formation (auch "Packschema" genannt), damit sie von einem Greifer erfasst und auf eine Palette, ein Tablett oder einen Zwischenboden gestellt werden können oder darauf geschoben werden können. Dadurch kann eine zweckmässige Aufstellung in Schichten zwecks Verpackung, Lagerung und Transport erreicht werden.

Das Formieren muss mit grosser Geschwindigkeit in korrekten Reihen, ohne Umfallen und unter Ausschluss von Bruchmöglichkeit erfolgen. Die nach dem Stande der Technik bekannten und angewendeten Schiebe-, Hebe- und Stapelvorrichtungen ("Stacker") und Ueberstellkonstruktionen, die die Behälter in einer oder mehreren Reihen aufstellen müssen, arbeiten mit einer hin- und hergehenden Bewegung und können nicht mehr die Anforderungen erfüllen, die durch das Verarbeiten grosser Anzahlen mit hoher Leistung (d.h. die Zahl der verarbeiteten Behälter pro Minute) gestellt werden, weil die Aufstellung entweder zu langsam verläuft oder zu Umfallen, Bruch und/oder Unregelmässigkeiten in der Packordnung führt.

Die optimale Packordnung ist diejenige, in der die Behälter in jeder Reihe von vorne bis hinten einander berührend aufgestellt sind und seitlich in Bezug aus die daneben stehende Reihe um einen Halbmesser verschoben (versetzt) angeordnet sind, so dass die dichteste horizontale Packung erhalten wird.

In der Britischen Patentbeschreibung 1,014,767 ist eine Vorrichtung zum Ordnen von Flaschen und Behältern beschrieben, die auf einem Förderband ungeordnet zugeführt werden und durch Schiebestäbe auf waagerecht verlaufenden Förderketten zu einer Formation geordnet werden, so dass die Formation erfasst und in Kartons oder ähnliche Verpackungen gestellt werden kann.

Es wurde nun eine Vorrichtung gefunden, die völlig automatisch drei Behälterlagen pro Minute aus einer Einerreihe, die auf einem Plattenkettenförderer angeliefert wird,in der beabsichtigten Formation aufstellt, ohne dass Verzögerung, Störung des Packschemas, Umfallen oder Beschädigung der Behälter auftreten kann.

Die Vorrichtung für das Formieren abgezählter Schichten mit regelmässigen Reihen von Behältern gemäss einer optimalen Packordnung zwecks Lagerung, Verpackung und Versand gemäss der vorliegenden Erfindung enthält einen Schubbalkenförderer mit parallel laufenden endlosen Förderketten, die miteinander verbunden sind durch 34 Paar Schubbalkenhalter, von denen jedes Paar verbunden ist durch einen horizontalen Schubbalken, der eine Reihe vorwärts schiebt auf einen Sammeltisch, wobei jeder Schubbalken, von zwei aufwärts verlaufenden Führungsschienen geleitet, eine aus dem Niveau der Behälter heraushebende Aufwärtsbewegung ausführt, so dass dann die Reihen aneinander geschoben werden zu einer Formation, wonach die Schichten, auf dem Förderband des Sammeltisches laufend, durch einen oder durch mehrere Schichtentrenner, von Photozellen gesteuert, getrennt werden.

Die erfindungsgemässe Vorrichtung ist gekennzeichnet durch einen Vorsammler, auf den die durch einen Plattenkettenförderer herangeführten Behälter durch Zwischenwände in zweimal zwei parallel zu einander fortlaufende Reihen getrennt werden und bis an eine Stoppervorrichtung bewegt werden, die sich in bestimmten Zeitabständen öffnet, so dass die Behälter in Abschnitten mit bestimmter Anzahl von Querreihen auf den Schubbalkenförderer geschoben werden, dessen Bewegung quer zur Zufuhrrichtung des Vorsammlers stattfindet und der zwei parallel verlaufende endlose Förderketten enthält, die durch einen Förderkettenantrieb synchron umlaufend angetrieben werden und die Schubbalkenhalter tragen, an denen horizontale Schubbalken auf und ab verschiebbar angebracht sind, zwischen denen die Behälterreihen fortbewegt werden, und die Schubbalken durch eine aufwärts führende Führungsschiene angehoben werden, so dass die Behälter eine dichte Packung in aufeinander folgenden Querreihen bilden, die auf einen als Förderband ausgebildeten Sammeltisch mit Schichttrennern,die durch Photozellen elektronisch gesteuert werden, zu einer Staukante geschoben wird.

Das Verfahren ist so gestattet, dass die Behälter auf einer Bahn in einer Reihe angeliefert werden, wobei die Abstände voneinander unterschiedlich sein können, und auf den kontinuierlich betriebenen Vorsammler geleitet werden, auf dem durch Zwischenwände zweimal zwei parallel fortlaufende Reihen gebildet werden, die durch Stoppervorrichtungen angehalten werden.

Während die Förderketten des Schubbalkenförderers stillstehen, öffnen sich die Stoppervorrichtungen, und die Behälter laufen in Reihen zwischen die horizontalen Schubbalken, die dabei als Führung dienen. Die für eine Reihe erforderliche Behälteranzahl wird dabei durch Zählen oder als Reihenlänge festgelegt.

Nachdem die erforderliche Behälteranzahl zwischen die Schubbalken gelaufen ist, schliessen sich die Stoppervorrichtungen wieder.

2

Die Behälter werden durch Puffer, die mit einer Einstellschraube versehen sind, welche zuvor der Abmessung der Behälter entsprechend eingestellt wurde, im Vortransport derart begrenzt, dass sie bezüglich der Behälter der davor stehenden Reihe um einen halben Durchmesser versetzt aufgestellt werden.

Der Schubbalkenförderer läuft dann an und schiebt die Behälterreihen quer zur Einlaufrichtung auf den Sammeltisch, bis die erste Reihe eine Lichtschranke einer ersten Photozelle unterbricht, damit den Schubbalkenförderer stillsetzt und die Stoppervorrichtungen öffnet und die nächsten Behälterreihen einlaufen.

Während des Vorschiebens der Reihen durch den Schubbalkenförderer werden die Behälterreihen vom mit gleicher Geschwindigkeit laufenden Sammeltisch übernommen.

Da sich die Schubbalken, ohne ihren Abstand zueinander zu verändern, geführt durch die Führungsschiene nach oben bewegen, geben sie die Behälterreihen frei, und diese werden auf dem Sammeltisch weiter transportiert, bis sie vor dem Sperrbalken des Schichttrenners zum Stau kommen. Wenn die gewünschte Anzahl von Reihen angestaut ist, werden die Lichtschranken der zweiten und dritten Photozelle durchbrochen, die anzeigen, dass das Packschema vollständig formiert ist; der Schichttrenner hebt den Sperrbalken über die Behälterhöhe an und lässt die gesamte, als Packschema formierte Schicht durchlaufen, bis sie gestaut wird vor dem nächsten Schichttrenner bezw. bis zur Stauleiste am Ende des Sammeltisches.

Die gemäss diesem Verfahren formierte Behälterschicht wird dann auf Paletten gestellt, und zwar nach verschiedenen Methoden. Enghalsflaschen werden von einem Greifer an den Hälsen erfasst und gemäss dem Packschema Schicht auf Schicht auf die Palette gestellt, wobei die Schichten auf Zwischenböden gesetzt werden, die auf der Palette gestapelt werden.

Weithalsgläserwerden von einem Greifer mit pneumatischen Spreizfingern oder von einer Vakumplatte aufgenommen und auf die Palette gesetzt. Flaschen und Gefässe können auch vom Sammeltisch auf eine Stahlplatte geschoben werden, die über die Palette fährt und dann unter den Behältern weggezogen wird, wodurch die Behälter auf die Palette bezw. auf die durch einen Zwischenboden abgedeckte, zuvor aufgesetzte Schicht gestellt werden.

Als Zwischenboden dienen dazu Böden oder Deckel aus Wellpappe oder flache Platten aus Pappe, Kraftpapier, Faserplatte, Kunststoff, Sperrholz oder anderem geeigneten Plattenmaterial.

Die vorliegende Erfindung wird näher erklärt an Hand der anliegenden vier Zeichnungen, die schematisch den Gegenstand der Erfindung wiedergeben.

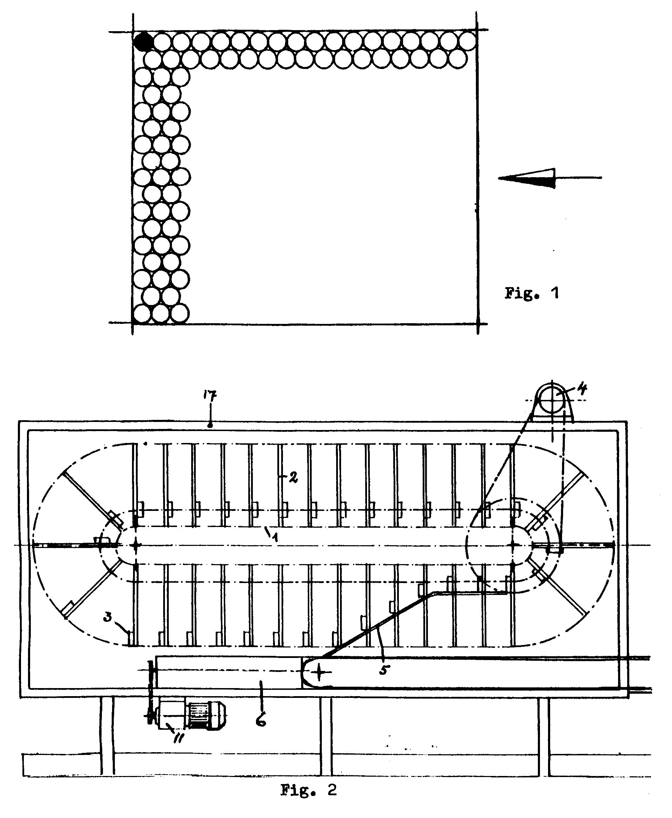

Figur 1 stellt eine Projektion von oben einer Packformation für runde Behälter dar (Flaschen, zylindrische Dosen oder Glasgefässe), aus welcher eine vorgesehene Konfiguration ersichtlich ist.

Figur 2 stellt den Schubbalkenförderer im Vertikalschnitt dar.

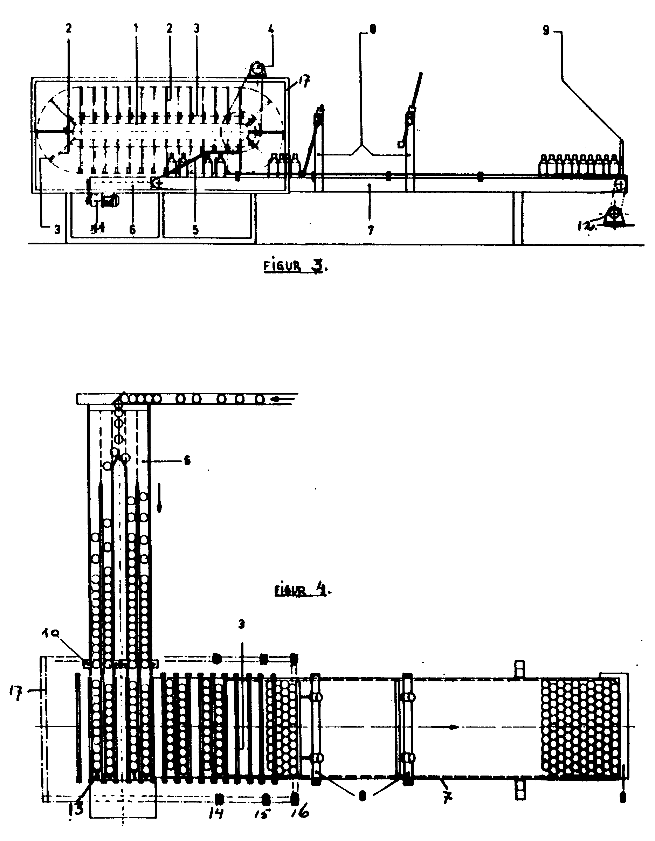

Figur 3 stellt die Zusammenstellung des Schubbalkenförderers mit dem Sammeltisch und dem Zubehör im Vertikalschnitt dar.

Figur 4 stellt eine Projektion von oben der gesamten Vorrichtung zum Formieren von auf einem Förderband lose angelieferten runden Behältern zu Reihen und Abschnitten des gewünschten Packschemas dar.

Die Bezugszeichen geben in diesen Figuren dieselben Teile an, die für die Vorrichtung und das damit ausgeführte Verfahren von Bedeutung sind.

In den Figuren ist 1 eine Förderkette, 2 ein Schubbalkenhalter, 3 ein horizontaler Schubbalken; 4 ist der Antrieb der Förderketten, 5 ist eine aufwärts verlaufende Führungsschiene zum Anheben der Schubbalken, 6 ist der Vorsammler, auf dem durch vertikal aufgestellte Trennmittel parallel fortbewegte Reihen gebildet werden, die von Stoppervorrichtungen 10 aufgehalten werden.

11 ist der Elektromotor, mit stufenlos regelbarem Getriebe, für das Einschieben zwischen die Schubbalken 3.

7 ist der Sammeltisch, dessen Förderband durch den Motor 12 mit Getriebe angetrieben wird.

8 sind die Schichttrenner, von denen einer nach unten geschoben und einer nach oben gezogen gezeichnet ist.

9 ist die Staukante am Ende des Sammeltisches.

13 ist ein Puffer mit Einstellschraube.

14, 15 und 16 sind die erste, zweite, bezw. dritte Infrarot-Photozelle mit Lichtschranken, die als Sensoren funktionieren für die Steuerung der Reihen zur Bildung des Packschemas, und 17 ist das Gehäuse des Schubbalkenförderers.

Als Beispiel mag gelten, dass mit der Vorrichtung gemäss der Erfindung pro Sekunde 12 Flaschen angeliefert werden können, die in 20 Sekunden zu einer Schicht von 240 Flaschen formiert werden, so dass in 1 Minute eine Einheit von 720 Flaschen in 3 Schichten gebildet werden kann.

Das Formieren von Verpackungen, die nicht rund sind, ist zumeist einfacher, doch auch dafür kann die vorliegende Aufstellung angewandt werden, um hohe Geschwindigkeiten zu erreichen.

**Patentansprüche**

1. Vorrichtung für das Formieren von Behältern in Abschnitten von regelmässigen Reihen gemäss einem Packschema zwecks Verpackung, Lagerung und Transport, die einen Plattenkettenförderer und eine Sammelvorrichtung enthält, gekennzeichnet durch einen Vorsammler (6), auf den die durch einen Plattenkettenförderer herangeführten Behälter durch Zwischenwände in zweimal zwei parallel zu einander fortlaufende Reihen getrennt werden und bis an eine Stoppervorrichtung (10) bewegt werden, die sich in bestimmten Zeitabständen öffnet, so dass die Behälter in Abschnitten mit bestimmter Anzahl von Querreihen auf einen Schubbalkenförderer geschoben werden, dessen Bewegung quer zur Zufuhrrichtung des Vorsammlers (6) stattfindet, welcher Schubbalkenförderer zwei parallel verlaufende endlose Förderketten (1) enthält, die durch einen Förderkettenantrieb (4) synchron umlaufend angetrieben werden und Schubbalkenhalter (2) tragen, an denen horizontale Schubbalken (3) auf und ab verschiebbar angebracht sind, zwischen denen die Behälterreihen fortbewegt werden, und die Schubbalken (3) durch eine aufwärts führende Führungsschiene (5) angehoben werden, so dass die Behälter eine dichte Packung in aufeinander folgenden Querreihen bilden, die auf einen als Förderband ausgebildeten Sammeltisch (7) mit wenigstens einem, mehrere Querreihen zu einer Packschicht zusammenfassenden Schichttrenner (8), der durch Photozellen (14, 15, 16) elektronisch gesteuert wird, geschoben und anschliessend zu einer Staukante (9) transportiert werden.

2. Vorrichtung nach Anspruch 1, dadurch gekennzeichnet dass die Behälter in auf einander folgenden Querreihen eine dichte Packung mit halber Versetzung bilden.

3. Verfahren zum Formieren von Behältern zu geordneten Packschichten, wobei die Behälter, deren Abstände zueinander verschieden sein können, in einer Reihe angeliefert und kontinuierlich in einen Vorsammler (6) geführt werden, auf dem durch vertikal gestellte Zwischenwände zweimal zwei parallele Reihen von Behältern gebildet werden, die durch in Zeitabständen funktionierende Stoppervorrichtungen (10) angehalten werden, wonach die Behälter in Reihen zwischen horizontale Schubbalken (3) transportiert werden, die als Führung dienen, und die Behälter quer zur Richtung des Vorsammlers (6) auf einen Sammeltisch (7) schieben, wonach die Schubbalken (3) eine Aufwärtsbewegung ausführen, so dass die Reihen in der Formation der erwünschten horizontal dichtesten Packung aneinander gestellt werden, worauf sie vor einem Schichttrenner (8) zum Stillstand gebracht werden.

## Claims

1. A device for setting up containers in form of arrangements of regular rows, according to a packing scheme for packaging, storage and transport, comprising a sheet conveyor and a collecting device, characterized by a collecting track (6), whereupon the containers supplied by the sheet conveyor are separated by means of delimiting partitions into double lines of two rows, pushed on parallel to each other and shoving along to a stopper device (10), which opens at certain time intervals, such that said containers in arrangements of a certain number of cross-rows are pushed upon a conveyor with sliding beam guides, which moves transverse to the supply direction of said collecting track (6), and that the conveyor belt with sliding beam guides has two parallel endless conveyor chains (1), which are driven by a conveyor chain drive (4), circulating synchronously, and which are bearing the beam guides (2), connected with horizontal pushing beams (3), which can slide upwards and downwards, between which the container rows are moved forward, and the pushing beams (3) are lifted by a guiding rail (5), which is guiding upward, such that the containers are placed in sequences of transversal rows in close positions, which are pushed upon a collecting platform conveyor (7), having at least one separator (8) of layers, packing up several transversal rows into one packing layer at every turn, said separator being controlled by photoelectric cells (14, 15, 16), said rows being transported to a retaining rim (9) subsequently.

2. A device according to claim 1, characterized in that the containers in sequences of rows constitute a dense packing with mutual half displacement.

3. A method for the setting up of containers in controlled packing layers, whereby the containers, which are supplied in a row having any possible distance one to another, are being guided continuously to a collecting track (6), whereupon by means of vertical delimiting partitions double lines of two rows of containers are formed, which are stopped by stopper devices (10), functioning at certain time intervals, whereafter the containers are transported in rows between horizontal pushing beams (3), which are serving as guidances, and which push said containers in a direction transversal to the direction of the collecting track (6) upon a collecting platform (7), whereafter the pushing beams (3) are moving upward, such that the rows in the formation of the desired horizontal dense position are being placed together, whereafter the rows are stopped by a separator (8) of layers.

## Revendications

1. Un dispositif pour assembler des récipients en sections de rangs selon un schème d'emballage, au but de l'empaquetage, de l'emmagasinage et du transport, comportant un transporteur-roulant en plaques à chaine et un outillage-collecteur, caractérisé par un dispositif de décalage (6), sur lequel les récipients amenés par un convoyeur en plaques à chaine sont partagés par des cloisons en doubles rangées deux à deux en lignes parallèles dans un mouvement de mise en marche jusqu'à une tige d'arrêt (10), qui s'ouvre périodiquement tellement que lesdits récipients rangés en groupes d'un certain nombre de rangs glissèrent sur un transporteur muni de barres poussantes, dont le mouvement s'effectue dans la direction transversale à la direction du dispositif de décalage (6), et que le transporteur muni de barres poussantes contient deux chaines de transport parallèles (1), qui sont actionnées synchronisément par commande motrice (4), portant des porteurs (2) des barres poussantes, auxquels les barres poussantes horizontales (3) sont équipées en construction glissante pour un mouvement en haut et en bas, et les rangs de récipients sont transportés entre lesdites barres, jusqu'à l'élévation des dites barres (3) par des rails de guidage en haut (5), tellement que lesdits récipients créent un assemblage dense en rangs successifs alignés de travers, qui sont poussés sur un collecteur plat (7) pour vu d'un séparateur (8) de couches, où les rangées transversales sont emballées dans une couche à chaque tour, et le séparateur est controllé par cellules photoélectriques (14, 15, 16), tandis que les rangées sont transportées vers un bord rabattu (9).

2. Un dispositif d'après la revendication 1, caractérisé en ce que les récipients constituent un assemblage dense de rangées successives alignées de travers en demi-déplacement.

3. Une méthode pour l'assemblage de récipients en couches d'empaquetage méthodique dans laquelle les récipients, dont les distances mutuelles peuvent être différentes, sont délivrées dans un rang et amenées dans un dispositif de décalage (6), sur lequel par des cloisons positionnées verticalement de doubles rangées deux à deux en lignes parallèles sont formées, qui sont arretées par tiges d'arrêt (10), qui fonctionnent périodiquement, et ensuite les récipients sont transportés rangés entre des barres (3) poussantes horizontales, qui conduisent les récipients alignées dans la direction transversale à celle du dispositif de décalage (6) et les poussent sur le collecteur (7), puis les barres (3) montent et les rangées dans la formation sont positionnées dans l'assemblage dense horizontal comme désiré et ensuite arrêtées devant un séparateur (8) des couches.

Fig. 1

Fig. 2

FIGUR 3.

FIGUR 4.